# EUROPÄISCHE PATENTSCHRIFT

(11) **EP 1 692 435 B1**
(45) Veröffentlichungstag und Bekanntmachung des Hinweises auf die Patenterteilung: **10.12.2008**
(21) Anmeldenummer: 04799046.0
(22) Anmeldetag: 25.11.2004
(51) Int. Cl.: F24J 2/42, F24J 2/46

(54) **SOLARANLAGE**
SOLAR INSTALLATION
INSTALLATION SOLAIRE

(30) Priorität: 12.12.2003 AT 19982003
(43) Veröffentlichungstag der Anmeldung: 23.08.2006
(73) Patentinhaber: EUROVOX ANSTALT, 9490 Vaduz (LI)
(72) Erfinder: VÖGELIN, Daniel, CH-8247 Flurlingen (CH)
(74) Vertreter: Hofmann, Ralf U.
(86) Internationale Anmeldenummer: PCT/IB2004/004243
(87) Internationale Veröffentlichungsnummer: WO 2005/059445

(56) Entgegenhaltungen:
- EP-A- 1 089 041
- AU-B2- 524 889
- DE-A1- 2 614 142
- DE-A1- 19 906 087
- NL-A- 8 102 798
- US-A- 4 237 862
- US-A- 4 269 167
- US-A- 4 299 200
- US-A- 4 336 792

## Beschreibung

Die Erfindung betrifft eine Solaranlage mit mindestens einem Sonnenkollektor, mindestens einem Wärmetauscher und mindestens einer Umwälzpumpe, die in einem Förderkreislauf für eine von der Umwälzpumpe umwälzbare Wärmeträgerflüssigkeit angeordnet sind, und mit einer Auffangkammer, in die im ausgeschalteten Zustand der Umwälzpumpe Wärmeträgerflüssigkeit unter Entleerung des Sonnenkollektors einfließt, wobei sich der Förderkreislauf über eine Höhendifferenz zwischen einem tiefsten und einen höchsten Punkt erstreckt.

Solaranlagen mit thermischen Sonnenkollektoren können Temperaturen erreichen, bei welchen übliche Wärmeträgerflüssigkeiten bei Drücken unter 6 bar verdampfen. Ein Verdampfen der Wärmeträgerflüssigkeit führt aber zu Lebensdauereinschränkungen der Wärmeträgerflüssigkeit und zu erheblichen Belastungen der Sonnenkollektoren und der dazugehörenden Hydraulikkreisläufe mit deren Komponenten.

Neben ständig ganz mit Wärmeträgerflüssigkeit befüllten Solaranlagen, die ein Expansionsgefäß zur Aufnahme von Volumenschwankungen der Wärmeträgerflüssigkeit aufweisen und Umwälzpumpen benötigen, die nur geringe Druckerhöhungen leisten, sind zur Vermeidung der Probleme in Folge der Verdampfung der Wärmeträgerflüssigkeit bereits sogenannte "entleerende Anlagen" bekannt geworden. Bei diesen wird der Sonnenkollektor nur mit Wärmeträgerflüssigkeit gefüllt, wenn eine Wärmeentnahme erfolgt und die Umwälzpumpe in Betrieb ist.

Zu diesem Zweck ist ein im Förderkreislauf angeordneter Vorratsbehälter für die Wärmeträgerflüssigkeit vorhanden, der in der Nähe des üblicherweise im Gebäudekeller sich befindenden Abnehmers angeordnet ist oder in den Abnehmer integriert ist. Mit Hilfe einer Umwälzpumpe, die die nötige Förderhöhe ermöglicht (durch eine ausreichende Druckerhöhung), wird die Wärmeträgerflüssigkeit im Bedarfsfall aus dem Vorratsbehälter in den Wärmekollektor gefördert und fließt vom Wärmekollektor wiederum in den Vorratsbehälter zurück. Bei einem Wegfall des Bedarfs stellt die Umwälzpumpe ab und die Flüssigkeit fließt aus dem Sonnenkollektor und den zum Sonnenkollektor führenden Leitungen in den Vorratsbehälter ab. Damit dieses Zurückfließen erfolgen kann, sind stetig steigende Verbindungsleitungen zwischen dem Abnehmer und dem Sonnenkollektor erforderlich. Diese können jedoch bei vielen Anlagen aus baulichen Gründen nicht realisiert werden. Ein weiterer Nachteil dieser Systeme besteht in den benötigten, ausreichende Druckerhöhuhgen aufweisenden Pumpen, wobei für diesen Einsatz nicht in der Heizungs- oder Sanitärbranche übliche Typen (sogenannte "Heizungspumpen") anwendbar sind, was die Anlagen einerseits verteuert und andererseits den Aufwand im Reparaturfall erheblich vergrößert. Weiters müssen diese Pumpen eine "Luftverträglichkeit" gegenüber aus dem Vorratsbehälter vom Flüssigkeitsstrom mitgenommenen Luftblasen aufweisen.

Aus der DE 202 06 564 U1 ist eine selbstentleerende Solaranlage bekannt, bei welcher der Wärmespeicher direkt als Rücklaufbehälter dient. Bei stehender Umwälzpumpe läuft die Wärmeträgerflüssigkeit in den Wärmespeicher unter Entleerung des Sonnenkollektors zurück. Zur Erleichterung des Leerlaufens ist eine Verbindungsleitung zwischen der Vorlaufleitung und der Rücklaufleitung des Sonnenkollektors vorhanden, die ein Rückschlagventil aufweist und auch als Luftabscheider dient.

Aus der DE 199 53 493 A1 ist eine Solaranlage bekannt, welche neben einem Sonnenkollektor und einem Speicherbehälter auch einen separaten Vorratsbehälter aufweist. Von diesem Vorratsbehälter führt eine Bypassleitung zur Vorlaufleitung des Sonnenkollektors und mündet in diese über ein Dreiwegventil ein. Neben der Wärmeträgerflüssigkeit, beispielsweise Wasser, ist im Vorratsbehälter ein Schutzmedium eingefüllt. Dieses Schutzmedium ist innerhalb der Betriebstemperaturgrenzen der Solaranlage flüssig. Bei Gefahr einer Überhitzung der Wärmeträgerflüssigkeit im Sonnenkollektor oder bei Frostgefahr wird durch Umschalten des Dreiwegventils das Schutzmedium in einem Schutzkreislauf durch den Sonnenkollektor gefördert.

US-A-4,336,792 offenbart eine Solaranlage gemäß dem Oberbegriff des Anspruchs 1.

Aufgabe der Erfindung ist es, eine verbesserte "selbstentleerende" Solaranlage der eingangs genannten Art bereitzustellen. Erfindungsgemäß gelingt dies durch eine Solaranlage mit den Merkmalen des Patentanspruchs 1.

Bei einer erfindungsgemäßen Solaranlage kann vermieden werden, dass eine Pumpe welche eine "Gasverträglichkeit" aufweist, eingesetzt werden muss (welche beispielsweise gegen Kavitation bei zugeführten Gasblasen unempfindlich sind) und es wird der Einsatz von kostengünstigen Umwälzpumpen ermöglicht, die eine geringere Druckdifferenz als bei herkömmlichen selbstentleerenden Solaranlagen eingesetzte Umwälzpumpen aufbringen. Insbesondere wird der Einsatz von handelsüblichen Pumpen möglich, wie sie in herkömmlichen druckbeaufschlagten Heizungskreisen eingesetzt werden und die auch als "Heizungspumpen" bezeichnet werden.

Weitere Vorteile und Einzelheiten werden im Folgenden anhand der beiliegenden Zeichnung erläutert. In dieser zeigen:
- Fig. 1: eine schematische Darstellung eines ersten Ausführungsbeispiels;
- Fig. 2: eine schematische Darstellung einer Ausführungsvariante der Auffangkammer und der Gasabscheideeinrichtung;
- Fig. 3,: Fig. 4 und Fig. 5 schematische Darstellungen von weiteren Ausführungsvarianten;
- Fig. 6: eine schematische Darstellung einer weiteren Anschlussmöglichkeit der Auffangkammer an den Förderkreislauf;
- Fig. 7: eine schematische Darstellung einer möglichen Ausbildungsform der Gasabscheideeinrichtung der Erfindung und
- Fig. 8: eine schematische Darstellung einer weiteren Anschlussmöglichkeit der Auffangkammer an den Förderkreislauf.

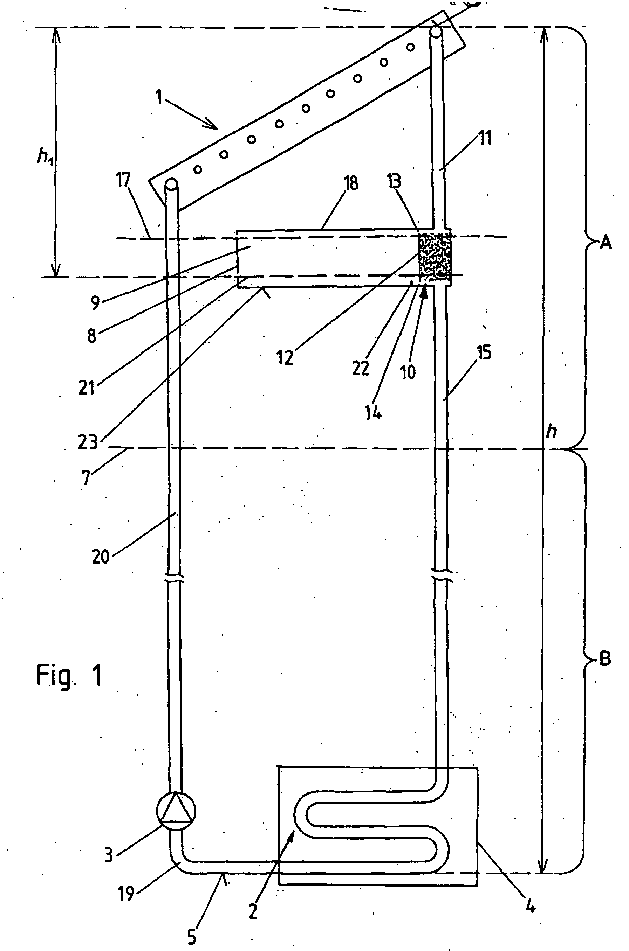

Das in Fig. 1 dargestellte Ausführungsbeispiel einer Solaranlage umfasst einen thermischen Sonnenkollektor 1, einen Wärmetauscher 2 und eine Umwälzpumpe 3, die in einem Förderkreislauf für die Wärmeträgerflüssigkeit angeordnet sind. Der Wärmetauscher 2 ist beispielsweise in einem schematisch angedeuteten Heißwasserspeicher 4 angeordnet. Der Förderkreislauf erstreckt sich über eine Höhendifferenz h zwischen einem tiefsten Punkt 5 und einem höchsten Punkt 6, wobei im Ausführungsbeispiel gemäß Fig. 1 der Sonnenkollektor im Bereich A oberhalb der Höhenmitte, die in Fig. 1 durch die strichlierte Linie 7 angedeutet ist, und der Wärmetauscher 2 im Bereich B unterhalb der Höhenmitte 7 zwischen dem tiefsten und höchsten Punkt 5, 6 liegen. Üblicherweise sind der Sonnenkollektor 1 auf dem Gebäudedach und der Wärmetauscher 2 im Keller des Gebäudes angeordnet.

Im Förderkreislauf ist weiters eine Gasabscheideeinrichtung 10 angeordnet, die im stationären Betriebszustand bei eingeschalteter Umwälzpumpe 3 von Wärmeträgerflüssigkeit durchflossen wird. Dieser stationäre Betriebszustand bei eingeschalteter Umwälzpumpe 3 liegt nach dem (weiter unten genauer erläuterten) Befüllvorgang der bei stillgesetzter Umwälzpumpe 3 entleerten Bereiche der Anlage vor. Die die Wärmeträgerflüssigkeit vom Sonnenkollektor abführende Leitung 11 mündet dabei von oben her in die Gasabscheideeinrichtung 10. Im gezeigten Ausführungsbeispiel wird die Gasabscheideeinrichtung 10 in vertikaler Richtung von der Wärmeträgerflüssigkeit durchflossen.

Die Solaranlage weist weiters eine innerhalb eines Gehäuses 8 sich befindende Auffangkammer 9 auf. In die Auffangkammer 9 fließt im ausgeschalteten Zustand der Umwälzpumpe 3 Wärmeträgerflüssigkeit ein, wobei der Sonnenkollektor 1 entleert wird, wie weiter unten noch genauer erläutert wird.

Im Ausführungsbeispiel gemäß Fig. 1 sind die Gasabscheideeinrichtung 10 und die Auffangkammer 9 in einem gemeinsamen Gehäuse 8 angeordnet und durch eine innerhalb des Gehäuses 8 liegende Zwischenwand 12 voneinander abgegrenzt. In der Zwischenwand 12 ist eine untere und eine obere Öffnung 14, 13 angeordnet, welche Fluidverbindungen darstellen, durch die die Auffangkammer 9 an den Förderkreislauf angeschlossen ist. Als Fluidverbindung wird im Rahmen dieser Schrift eine Leitung, ein Kanal, ein Loch in einer Wand oder dgl. zum Durchströmen einer Flüssigkeit oder eines Gases bezeichnet. Die Auffangkammer 9 ist somit über diese durch die Öffnungen 14, 13 gebildeten Fluidverbindungen dem Abschnitt des Förderkreislaufes parallel geschaltet, in welchem die Gasabscheideeinrichtung 10 angeordnet ist.

Der Unterrand 23 der Auffangkammer 9 liegt weniger als 7m, günstigerweise weniger als 5m, unterhalb des höchsten Punktes 6 des Förderkreislaufes. In einer bevorzugten Ausführungsvariante beträgt dieser Wert weniger als 3 m. Im gezeigten Ausführungsbeispiel sind sowohl die Auffangkammer 9 als auch die Gasabscheideeinrichtung 10 oberhalb der Höhenmitte 7 des Förderkreislaufs angeordnet, wobei die Gasabscheideeinrichtung 10 im Bereich der Höhe der Auffangkammer 9 liegt.

Die Gasabscheideeinrichtung wird von einer im Ausführungsbeispiel gemäß Fig. 1 ebenfalls innerhalb des Gehäuses 8 liegenden Kammer gebildet, in der ein Gasabscheidematerial 16 eingebracht ist, weiches beispielsweise von Edelstahlwolle, einem Gitternetzgeflecht oder einem anderen eine große Oberfläche aufweisenden Material gebildet werden kann.

Die strichlierte Linie 17 deutet den Flüssigkeitsspiegel der Wärmeträgerflüssigkeit im Ruhezustand der Anlage an, wenn die Umwälzpumpe 3 abgeschaltet ist und die selbsttätig ablaufenden Entleervorgänge (wie weiter unten beschrieben) abgeschlossen sind. Dieser Flüssigkeitsspiegel 17 könnte auch etwas niedriger in der Auffangkammer liegen, wenn in der Auffangkammer 9 noch ausreichend Wärmeträgerflüssigkeit zum Befüllen der entleerten Teile der Anlage vorhanden ist. Theoretisch könnte der Flüssigkeitsspiegel 17 auch etwas höher innerhalb der Kammer 9 oder auch oberhalb der Kammer 9 liegen, solange er unterhalb des Sonnenkollektors 1 liegt, der ja vollständig entleert sein soll, um die Gefahr des Verdampfens der Wärmeträgerflüssigkeit zu vermeiden. Bevorzugt ist aber eine Lage des Flüssigkeitsspiegels 17 im Bereich des Oberrandes 18 der Auffangkammer 9, wobei das hydraulische Volumen der Auffangkammer 9 und der Kammer der Gasabscheideeinrichtung 10 zusammen größer als das hydraulische Volumen der oberhalb der Auffangkammer 9 und Gasabscheideeinrichtung 10 liegenden Abschnitte der Solaranlage ist.

Wird ausgehend von diesem Ruhezustand der Anlage die Umwälzpumpe 3 in Betrieb gesetzt, so fließt diese Wärmeträgerflüssigkeit aus der Auffangkammer 9 durch die Öffnung 14 in die Leitung 15 und weiter durch den Wärmetauscher 2 und die zwischen Wärmetauscher 2 und Umwälzpumpe 3 sich befindende Leitung 19. Die Umwälzpumpe 3 fördert Wärmeträgerflüssigkeit weiters durch die Leitung 20 (welche die Rücklaufleitung des Sonnenkollektors 1 darstellt), wobei sie die Wärmeträgerflüssigkeit über den bisherigen Flüssigkeitsspiegel 17 anhebt und weiters durch den Sonnenkollektor 1 fördert, bis dieser vollständig gefüllt ist. Die Wärmeträgerflüssigkeit gelangt weiters durch die Leitung 11. Während dieser Befüllphase senkt sich der Flüssigkeitsspiegel in der Auffangkammer 9 stetig ab, bis die Wärmeträgerflüssigkeit die Leitung 11 durchflossen hat und von oben her der Gasabscheideeinrichtung 10 zugeführt wird. In der Folge stellt sich ein stationärer Betriebszustand (" Dauerbetriebszustand") ein, in welchem der Flüssigkeitsspiegel 21 innerhalb der Auffangkammer 9 im Wesentlichen konstant ist und oberhalb der Öffnung 14 liegt. Die Auffangkammer 9 ist hierbei vorzugsweise zum Großteil entleert.

In der Gasabscheideeinrichtung 10 stellt sich ein Gleichgewichtszustand ein, wobei der Flüssigkeitsspiegel in der Gasabscheideeinrichtung oberhalb des Unterrandes der Gasabscheideeinrichtung und unterhalb der Mündung der Leitung 11 liegt. In Abhängigkeit von der Größe der Öffnung 14 kann der Flüssigkeitsspiegel in der Gasabscheideeinrichtung 10 etwas höher als in der Auffangkammer 9 liegen. Die der Gasabscheideeinrichtung 10 von oben her zugeführte Wärmeträgerflüssigkeit bildet hierbei zunächst eine gewisse Strecke eines mehr oder weniger freien Strahls und gelangt dann in den mit Wärmeträgerflüssigkeit gefüllten Bereich der Kammer der Gasabscheideeinrichtung 10. Die Wärmeträgerflüssigkeit strömt weiter in die Leitung 15, ohne dass ein bedeutender Austausch mit der restlichen in der Auffangkammer 9 verbliebenen Wärmeträgerflüssigkeit stattfindet. Um diesen Austausch möglichst gering zu halten, ist im gezeigten Ausführungsbeispiel gemäß Fig. 1 ein vom Boden der Auffangkammer 9 nach oben abstehender Steg 22 im Bereich vor der Öffnung 14 vorgesehen.

Im stationären Betriebszustand bei eingeschalteter Pumpe ("Dauerbetriebszustand") wird die Wärmeträgerflüssigkeit also zumindest im Wesentlichen (d.h. zu mindestens 90%) an der Auffangkammer 9 vorbeigeführt, d.h. sie durchströmt diese nicht. Vielmehr durchströmt sie den Abschnitt des Förderkreislaufes, zu dem die Auffangkammer 9 parallel geschaltet ist. In diesem Abschnitt ist im gezeigten Ausführungsbeispiel die Gasabscheideeinrichtung 10 angeordnet.

Da es praktisch zu keinem Austausch zwischen der durch die Gasabscheideeinrichtung 10 im Förderkreislauf zirkulierenden Wärmeträgerflüssigkeit und der Wärmeträgerflüssigkeit in der Auffangkammer 9 kommt, kann auch eine Wärmeisolierung der Auffangkammer 9 entfallen, ohne dass es zu maßgeblichen Wärmeverlusten kommt.

Die Gasabscheideeinrichtung 10 scheidet mitgenommenes Gas aus der Wärmeträgerflüssigkeit wiederum aus, sodass die durch die Leitung 15 abgezogene Wärmeträgerflüssigkeit im Wesentlichen frei von mitgenommenen Gasblasen ist. Aus diesem Grund und da die von der Pumpe 3 aufzubringende Druckdifferenz zur Überwindung der Höhendifferenz h₁ gering ist, kann eine kostengünstige Umwälzpumpe 3 eingesetzt werden. Es können dann für die Umwälzpumpe 3 herkömmliche Heizungspumpen eingesetzt werden, welche beispielsweise als Kreiselpumpe bzw. Flügelradpumpe ausgebildet sein können. Besonders bevorzugt ist eine Anordnung der Auffangkammer 9 und der Gasabscheideeinrichtung 10 direkt im Bereich des Sonnenkollektors 1, d. h. die Länge der Leitung 11 zwischen dem Sonnenkollektor 1 und der Auffangkammer 9 bzw. Gasabscheideeinrichtung 10 beträgt weniger als 3m, vorzugsweise weniger als 1 m.

Wird die Umwälzpumpe 3 stillgesetzt und die Förderung von Wärmeträgerflüssigkeit beendet, so ist die Höhe der Flüssigkeitssäule, die sich vom tiefsten Punkt 5 durch die Leitungen 19, 20 und den Sonnenkollektor 1 und weiters die Leitung 11 bis deren Einmündung in das Gehäuse 8 erstreckt, etwas größer als die Höhe der Flüssigkeitssäule, die sich vom tiefsten Punkt 5 durch den Wärmetauscher 7 bis zum oberen Ende der Leitung 15 erstreckt. Die Differenz zwischen diesen Höhen ist gerade der Abstand des Flüssigkeitsspiegels in der Gasabscheideeinrichtung 10 zum Mündungsbereich der Leitung 11. Die Wärmeträgerflüssigkeit beginnt daher entgegen der Förderrichtung der Umwälzpumpe 3 von der Leitung 15 durch die Öffnung 14 in die Auffangkammer 9 einzufließen, wobei sich die Differenz zwischen den beschriebenen Flüssigkeitssäulen aufgrund des Einströmens von Gas von der Auffangkammer 9 in die Leitung 11 zunächst noch erhöht. Es strömt dabei Wärmeträgerflüssigkeit in die Auffangkammer 9 ein, bis der Sonnenkollektor 1 vollständig entleert ist und der Flüssigkeitsspiegel in der Leitung 20 bis zur strichlierten Linie 17 abgesunken ist. Die Leitungen 11, der Sonnenkollektor 1 und der oberste Abschnitt der Leitung 20 sind somit von Wärmeträgerflüssigkeit entleert und zuvor in der Auffangkammer 9 sich befindendes Gas ist in diese Bereiche eingeströmt, wobei sich der Flüssigkeitsspiegel in der Auffangkammer 9 und in der Gasabscheideeinrichtung 10 bis zur strichlierten Linie 17 angehoben hat. Das Gas kann beispielsweise von Luft gebildet werden. Da es sich beim Ausführungsbeispiel gemäß Fig. 1 um ein insgesamt geschlossenes System handelt, könnte das Gas prinzipiell auch unter einem über Atmosphärendruck liegenden Druck stehen, wodurch beispielsweise die Gefahr einer Kavitation der Umwälzpumpe 3 verringert werden kann.

Anstelle eines wie dargestellt insgesamt geschlossenen Systems wäre es prinzipiell auch denkbar und möglich, eine in den Bereich der Auffangkammer 9, der immer oberhalb des Flüssigkeitsspiegels liegt, mündende Entlüftungsleitung vorzusehen.

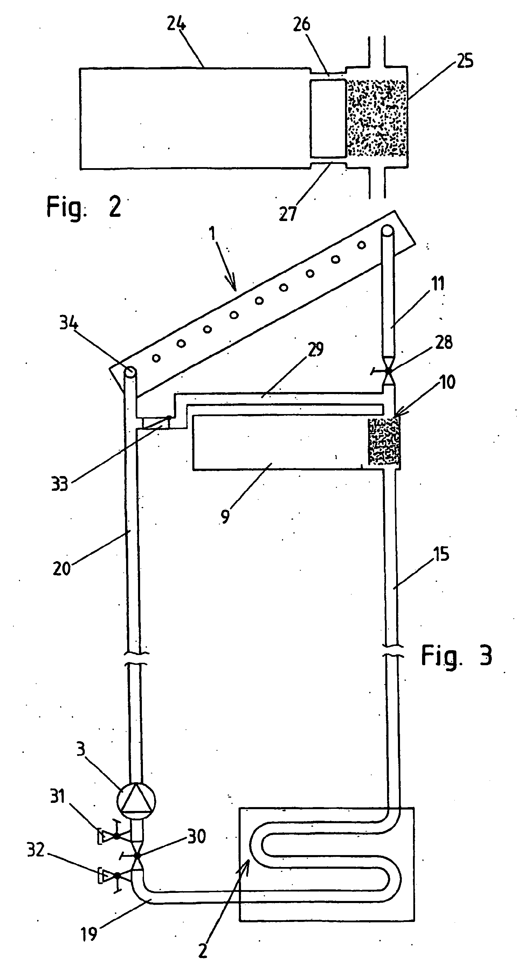

Bei der in Fig. 2 dargestellten modifizierten Ausführungsvariante der Auffangkammer 9 und Gasabscheideeinrichtung 10 besitzen die Auffangkammer 9 und die Gasabscheideeinrichtung 10 voneinander getrennte Gehäuse 24, 25 und sind über eine obere und eine untere Leitung 26, 27 miteinander verbunden. Die Leitungen 26, 27 bilden entsprechend den Öffnungen 13, 14 im Ausführungsbeispiel gemäß Fig. 1 Fluidverbindungen, über welche die Auffangkammer 9 an den Förderkreislauf angeschlossen ist. Die in den unteren Bereich der Auffangkammer 9 mündende Leitung 27 dient hierbei zum Ein- und Ausströmen der Wärmeträgerflüssigkeit und liegt sowohl bei ausgeschalteter als auch bei eingeschalteter Pumpe unterhalb des Flüssigkeitsspiegels in der Auffangkammer 9. Die Leitung 26 dient zum Ein- und Ausströmen von Gas und liegt zumindest im stationären Betriebszustand bei eingeschalteter Umwälzpumpe 3 oberhalb des Flüssigkeitsspiegels in der Auffangkammer 9. Wie im Ausführungsbeispiel gemäß Fig. 1 ist die Auffangkammer 9 auch beim Ausführungsbeispiel gemäß Fig. 2 demjenigen Abschnitt des Förderkreislaufes parallel geschaltet, in welchem die Gasabscheideeinrichtung 10 angeordnet ist.

Die Befüllung der Anlage gemäß dem Ausführungsbeispiel von Fig. 1 kann dadurch erfolgen, dass die Leitung 11 vom Gehäuse 8 abgenommen wird und Wärmeträgerflüssigkeit eingefüllt wird, bis der gewünschte Flüssigkeitsspiegel 17 erreicht ist. Bei dem in Fig. 3 dargestellten modifizierten Ausführungsbeispiel der Erfindung ist eine Fülleinrichtung mit Überfüllschutz integriert. Hierzu ist die Anlage zusätzlich mit einem Absperrventil 28 im unteren Bereich der Leitung 11, einer Bypassleitung 29 zwischen dem unterhalb des Absperrventils 28 liegenden Abschnitt der Leitung 11 und der Leitung 20, einem Absperrventil 30 in der Leitung 19 und beidseitig des Absperrventils angeordneten absperrbaren Anschlüssen 31 und 32 sowie einem in der Bypassleitung 29 angeordneten Rückschlagventil 33 gebildet wird. Das Absperrventil 28 liegt unterhalb des untersten Leitungsabschnittes 34 des Sonnenkollektors 1. Das Rückschlagventil 33 sperrt in Richtung von der Leitung 20 zur Leitung 11 und ist somit im normalen Betriebszustand bei laufender Umwälzpumpe 3 gesperrt. Weiters sind im Normalbetrieb die Absperrventile 30 und 28 geöffnet und die Anschlüsse 31, 32 versperrt.

Zum Befüllen der Anlage werden die Absperrventile 28, 30 gesperrt und durch den geöffneten Anschluss 32 wird Wärmeträgerflüssigkeit aus einem Vorratsbehälter eingepumpt. Vom Anschluss 31 wird eine Leitung in den Vorratsbehälter geführt. Sobald aus der Leitung 31 keine Luft mehr ausströmt ist die Anlage befüllt.

Die Bypassleitung 29 könnte anstelle von der Leitung 11 auch vom oberen Bereich der Auffangkammer 9 ausgehen.

Abgesehen von der Befüllung arbeitet die Anlage gemäß Fig. 3 wie die Anlage gemäß Fig. 1.

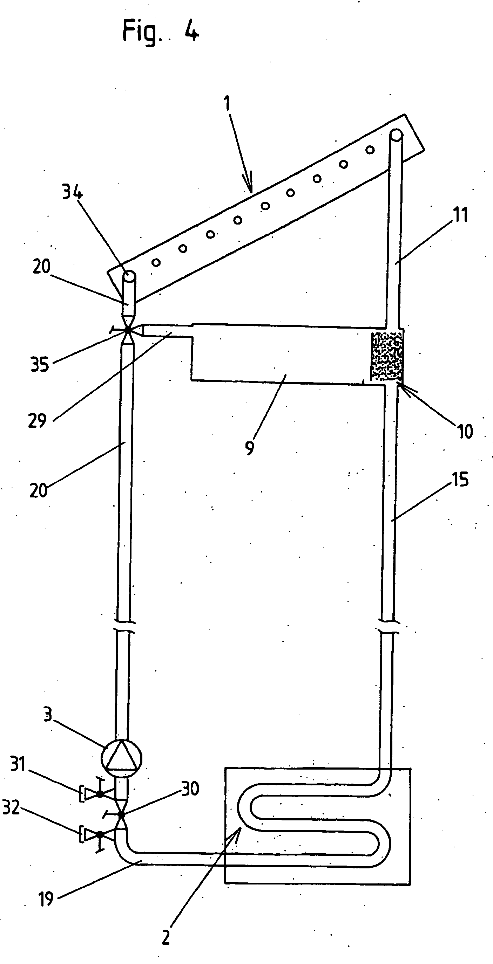

Eine weitere Ausführungsvariante der Befülleinrichtung ist in Fig. 4 dargestellt. In der Bypassleitung 29, die hier zwischen der Auffangkammer 9 und der Leitung 20 verläuft ist bei dieser Ausführungsvariante kein Rückschlagventil angeordnet, dafür ist die Bypassleitung 29 mit der Leitung 20 über ein Umschaltventil 35 verbunden. Bei der Befüllung wird das Umschaltventil 35 so gestellt, dass die Bypassleitung 29 mit dem unterhalb des Umschaltventils 35 liegenden Abschnitt der Leitung 20 verbunden ist. Im Normalbetrieb wird das Umschaltventil 35 so gestellt, dass die oberhalb und unterhalb des Unschaltventils 35 liegenden Abschnitte der Leitung 20 miteinander verbunden sind und die Bypassleitung 29 von der Leitung 20 getrennt ist. Die Bypassleitung 29 könnte anstelle von der Auffangkammer 9 auch von der Leitung 11 ausgehen, und zwar in einem unterhalb des untersten Leitungsabschnitts 34 des Sonnenkollektors 1 liegenden Bereich. Die Befüllung erfolgt in analoger Weise beim Ausführungsbeispiel von Fig. 3 bei geschlossenem Absperrventil 30 durch Zuführung von Wärmeträgerflüssigkeit durch den Anschluss 32, bis aus dem Anschluss 31 nurmehr Wärmeträgerflüssigkeit strömt.

Die übrigen Komponenten der Anlage können gegenüber Fig. 1 unverändert sein.

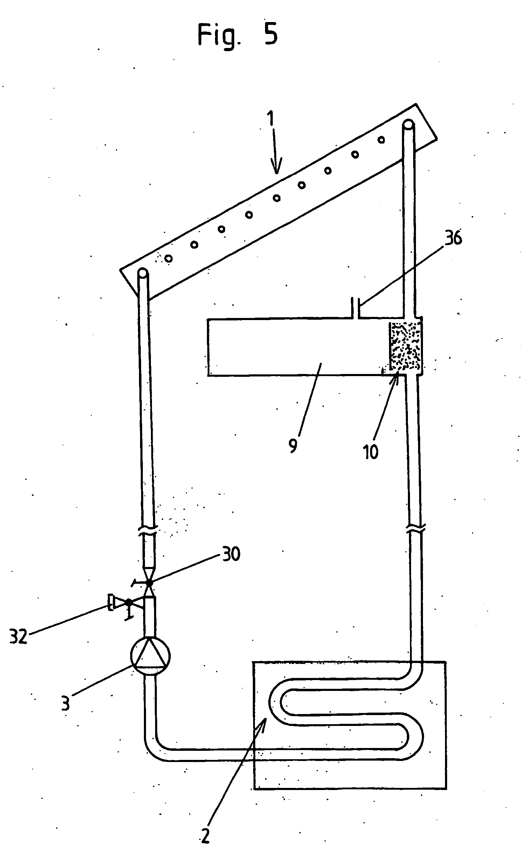

Eine weitere Ausführungsvariante ist in Fig. 5 dargestellt. Die Auffangkammer 9 ist über einen Be- und Entlüftungsstutzen 36 mit Atmosphäre verbunden, d.h. die Anlage wird drucklos betrieben. Die Fülleinrichtung liegt zwischen der Umwälzpumpe 3 und dem Sonnenkollektor 1 und wird von einem Absperrventil 30 und einem Anschluss 32 gebildet. Zur Befüllung der Anlage wird das Absperrventil 30 geschlossen und das Ventil des Anschlusses 32 wird geöffnet und die Wärmeträgerflüssigkeit über den Anschluss 32 in den Kreislauf gepumpt, bis sie am Be- und Entlüftungsstutzen 36, der somit als Überlaufrohr dient, austritt. Zur Befüllung des Leitungsstückes zwischen der Umwälzpumpe 3 und dem Sonnenkollektor 1 kann, wenn dies gewünscht ist, nach dem Öffnen des Absperrventils 30 noch eine dem Volumen dieses Leitungsstückes entsprechende Menge an Wärmeträgerflüssigkeit nachgefüllt werden.

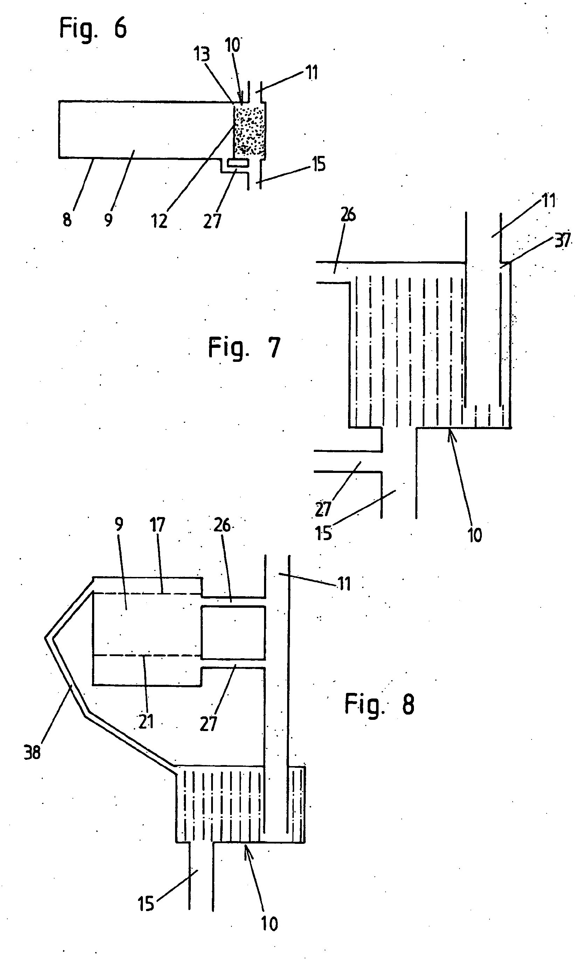

Bei dem in Fig. 6 dargestellten Ausführungsbeispiel sind die Auffangkammer 9 und die Gasabscheideeinrichtung 10 wiederum in einem gemeinsamen Gehäuse 8 angeordnet und durch eine Zwischenwand 12 voneinander getrennt. Die obere Fluidverbindung zum Ein- und Ausströmen von Gas wird durch die Öffnung 13 in der Zwischenwand gebildet, während die untere Fluidverbindung zum Ein- und Ausströmen der Wärmeträgerflüssigkeit von der Leitung 27 gebildet wird, die von der Unterseite der Auffangkammer 9 ausgeht und in die Leitung 15 etwas unterhalb der Gasabscheideeinrichtung 10 mündet. Ein Wärmeaustausch zwischen der im Dauerbetriebszustand sich in der Auffangkammer befindenden Wärmeträgerflüssigkeit mit der die Gasabscheideeinrichtung 10 durchströmenden Wärmeträgerflüssigkeit wird dadurch zusätzlich erschwert.

Ein Ausführungsbeispiel einer Gasabscheideeinrichtung der Erfindung ist in Fig. 7 dargestellt. Die vom Sonnenkollektor 1 kommende Leitung 11 erstreckt sich hier bis in den unteren Bereich der Kammer der Gasabscheideeinrichtung. Eine Öffnung 37 in dieser Leitung 11, die in den oberen Bereich der Kammer der Gasabscheideeinrichtung 10 mündet, dient zum Einströmen von Gas beim Entleervorgang des Sonnenkollektors 1, wenn die Umwälzpumpe 3 abgeschaltet wird.

Denkbar und möglich, wenn auch weniger bevorzugt, wäre auch eine Ausführungsvariante der in der Fig. 8 gezeigten Art. Die Gasabscheideeinrichtung 10 ist hier in einem Bereich des Förderkreislaufes angeordnet, der zwischen dem Anschluss der Auffangkammer 9 (über die Leitungen 26, 27) an den Förderkreislauf und der Umwälzpumpe 3 liegt, wobei die Gasabscheideeinrichtung 10 vorzugsweise weniger als 2 m unterhalb der Auffangkammer 9 angeordnet ist. Die Auffangkammer 9 ist somit bei diesem Ausführungsbeispiel einem Abschnitt des Förderkreislaufes parallel geschaltet, der durch einen Abschnitt der Leitung 11 gebildet wird. Die Flüssigkeitsspiegel in der Auffangkammer 9 im Ruhezustand bei ausgeschalteter Umwälzpumpe 3 (strichlierte Linie 17) und im Dauerbetriebszustand (strichlierte Linie 21) sind eingezeichnet. Die Leitung 38 dient zum Abführen von in der Gasabscheideeinrichtung 10 abgeschiedenem Gas in die Auffangkammer 9. Grundsätzlich wäre es auch denkbar und möglich, dass die Leitung 38 in die Atmosphäre mündet (oberhalb des Flüssigkeitsspiegels 17).

Unterschiedliche Modifikationen der gezeigten Ausführungsbeispiele sind denkbar und möglich. Beispielsweise können mehrere parallel oder hintereinander geschaltete Sonnenkollektoren vorhanden sein, beispielsweise in einem gemeinsamen Kollektorfeld zusammengefasst sein.

Natürlich können auch weitere Wärmetauscher im Förderkreislauf angeordnet sein, die sich in der gleichen oder in einer anderen Höhe wie der in den Fig. schematisch dargestellte Wärmetauscher 2 befinden können, wobei alle Wärmetauscher 2 bevorzugterweise unterhalb der Höhe des Aüffangbehälters 9 liegen und vorzugsweise ebenfalls im Bereich unterhalb der Höhenmitte 7 des Förderkreislaufes angeordnet sind.

Die Auffangkammer 9 kann auch von mehreren Einzelkammern gebildet werden, die in einem oder mehreren Gehäusen angeordnet sind. Mehrere Kammern könnten beispielsweise dann zur Anwendung kommen, wenn ein bestehendes System um zusätzliche Sonnenkollektoreinheiten erweitert werden soll, sodass sich die Menge der Wärmeträgerflüssigkeit in der Anlage vergrößert. Durch einen Anschluss von zusätzlichen Einzelkammern unter Vergrößerung des Gesamtvolumens der Auffangkammer 9 kann dabei die Anpassung an das vergrößerte Volumen von Wärmeträgerflüssigkeit erfolgen. Es sind dadurch weitere Sonnenkollektoreinheiten in einfacher Weise nachrüstbar. Die Einzelkammern könnten dabei jeweils durch obere und untere Fluidverbindungen miteinander verbunden sein, die in analoger Weise wie die von den Öffnungen 13, 14 bzw. Leitungen 26, 27 ausgebildeten Fluidverbindungen ausgebildet sein könnten.

Die Längen der Fluidverbindungen zwischen dem Förderkreislauf und der Auffangkammer 9 betragen vorzugsweise weniger als 2 m, wobei ein Wert von weniger als 1 m besonders bevorzugt ist.

### Legende zu den Hinweisziffern:

| | | | |
|---|---|---|---|
| 1 | Sonnenkollektor | 19 | Leitung |
| 2 | Wärmetauscher | 20 | Leitung |
| 3 | Umwälzpumpe | 21 | Flüssigkeitsspiegel |
| 4 | Heißwasserspeicher | 22 | Steg |
| 5 | tiefster Punkt | 23 | Unterrand |
| 6 | höchster Punkt | 24 | Gehäuse |
| 7 | Höhenmitte | 25 | Gehäuse |
| 8 | Gehäuse | 26 | Leitung |
| 9 | Auffangkammer | 27 | Leitung |
| 10 | Gasabscheideeinrichtung | 28 | Absperrventil |
| 11 | Leitung | 29 | Bypassleitung |
| 12 | Zwischenwand | 30 | Absperrventil |
| 13 | Öffnung | 31 | Anschluss |
| 14 | Öffnung | 32 | Anschluss |
| 15 | Leitung | 33 | Rückschlagventil |
| 16 | Gasabscheidematerial | 34 | Leitungsabschnitt |
| 17 | Flüssigkeitsspiegel | 35 | Umschaltventil |
| 18 | Oberrand . | 36 | Be- und Entlüftungsstutzen |
| | | 37 | Öffnung |
| | | 38 | Leitung |

## Patentansprüche

1. Solaranlage mit mindestens einem Sonnenkollektor (1), mindestens einem Wärmetauscher (2) und mindestens einer Umwälzpumpe (3), die in einem Förderkreislauf für eine von der mindestens einen Umwälzpumpe (3) umwälzbare Wärmeträgerflüssigkeit angeordnet sind, und mit einer Auffangkammer (9), in die im ausgeschalteten Zustand der mindestens einen Umwälzpumpe (3) Wärmeträgerflüssigkeit unter Entleerung des Sonnenkollektors (1) einfließt, wobei sich der Förderkreislauf über eine Höhendifferenz (h) zwischen einem tiefsten und einen höchsten Punkt (5, 6) erstreckt, wobei im Förderkreislauf eine im stationären Betriebszustand der Solaranlage bei laufender Umwälzpumpe von der Wärmeträgerflüssigkeit durchflossene Gasabscheideeinrichtung (10) angeordnet ist und wobei die Gasabscheideeinrichtung von einer Kammer gebildet wird, **dadurch gekennzeichnet, dass** der Unterrand (23) der Auffangkammer (9) weniger als 7 m, vorzugsweise weniger als 5 m unterhalb des höchsten Punktes (6) des Förderkreislaufs liegt, wobei ein Wert von weniger als 3 m besonders bevorzugt ist, und dass in die Kammer der Gasabscheideeinrichtung (10) ein Gasabscheidematerial eingebracht ist, und sich eine die Wärmeträgerflüssigkeit vom Sonnenkollektor (1) abführende Leitung (11) bis in den unteren Bereich der Kammer der Gasabscheideeinrichtung (10) erstreckt und eine zum Einströmen von Gas beim Entleervorgang des Sonnenkollektors (1), wenn die Umwälzpumpe (3) abgeschaltet wird, dienende Öffnung (37) in dieser Leitung (11) in den oberen Bereich der Kammer der Gasabscheideeinrichtung (10) mündet.

2. Solaranlage nach Anspruch 1, **dadurch gekennzeichnet, dass** eine die Wärmeträgerflüssigkeit vom Sonnenkollektor (1) abführende Leitung (11) die Wärmeträgerflüssigkeit der Gasabscheideeinrichtung (10) von oben her zuführt.

3. Solaranlage nach Anspruch 1 oder Anspruch 2, **dadurch gekennzeichnet, dass** die Auffangkammer (9) einem Abschnitt des Förderkreislaufes parallel geschaltet ist, wobei vorzugsweise die Wärmeträgerflüssigkeit im stationären Betriebszustand bei eingeschalteter Umwälzpumpe (3) zumindest im Wesentlichen ohne Vermischung mit der in der Auffangkammer (9) sich befindenden Wärmeträgerflüssigkeit den zur Auffangkammer (9) parallel liegenden Abschnitt des Förderkreislaufs durchströmt.

4. Solaranlage nach Anspruch 3, **dadurch gekennzeichnet, dass** im Abschnitt des Förderkreislaufes, dem die Auffangkammer (9) parallel geschaltet ist, zumindest ein Teil der Gasabscheideeinrichtung (10) angeordnet ist.

5. Solaranlage nach einem der Ansprüche 1 bis 4, **dadurch gekennzeichnet, dass** die Auffangkammer (9) über eine erste, in ihren unteren Bereich mündende Fluidverbindung (14, 27) zum Zu- und Abführen von Wärmeträgerflüssigkeit und eine zweite, in ihren oberen Bereich mündende Fluidverbindung (13, 26) zum Zu- und Abführen von Gas an den Förderkreislauf angeschlossen ist.

6. Solaranlage nach Anspruch 5, **dadurch gekennzeichnet, dass** die Länge der Fluidverbindungen zwischen dem Förderkreislauf und der Auffangkammer (9) weniger als 2 m, vorzugsweise weniger als 1 m betragen.

7. Solaranlage nach Anspruch 1 - 6, **dadurch gekennzeichnet, dass** die Länge der Leitung (11) zwischen dem Sonnenkollektor (1) und der Gasabscheideeinrichtung (10) weniger als 3 m, vorzugsweise weniger als 1 m beträgt.

8. Solaranlage nach einem der Ansprüche 1 bis 7, **dadurch gekennzeichnet, dass** die Gasabscheideeinrichtung (10) im Bereich der Höhe der Auffangkammer (9) liegt oder in einem Bereich zwischen dem Anschluß der Auffangkammer (9) an den Förderkreislauf und der Umwälzpumpe (3) angeordnet ist, wobei sie vorzugsweise weniger als 2 m unterhalb der Auffangkammer (9) liegt.

9. Solaranlage nach einem der Ansprüche 1 bis 8, **dadurch gekennzeichnet, dass** der Sonnenkollektor (1) im Bereich über der Höhenmitte (7) und der Wärmetauscher (2) im Bereich unter der Höhenmitte (7) des Förderkreislaufs angeordnet sind.

10. Solaranlage nach Anspruch 9, **dadurch gekennzeichnet, dass** die Auffangkammer (9) und die Gasabscheideeinrichtung (10) über der Höhenmitte (7) des Förderkreislaufs angeordnet sind.

11. Solaranlage nach einem der Ansprüche 3 bis 10, **dadurch gekennzeichnet, dass** die Gasabscheideeinrichtung (10) und die Auffangkammer (9) ein gemeinsames Gehäuse (8) aufweisen und durch eine innerhalb des Gehäuses angeordnete Zwischenwand (12) voneinander abgegrenzt sind, wobei die erste Fluidverbindung durch eine Öffnung (14) in der Zwischenwand (12) und/oder die zweite Fluidverbindung durch eine Öffnung (13) in der Zwischenwand (12) gebildet wird.

12. Solaranlage nach einem der Ansprüche 3 bis 10, **dadurch gekennzeichnet, dass** die Gasabscheideeinrichtung (10) und die Auffangkammer (9) voneinander getrennte Gehäuse (24, 25) aufweisen und über eine obere und eine untere Leitung (26,27) miteinander verbunden sind, die die erste und zweite Fluidverbindung zwischen der Auffangkammer (9) und dem Förderkreislauf bilden.

13. Solaranlage nach einem der Ansprüche 1 bis 12, **dadurch gekennzeichnet, dass** das hydraulische Volumen der Auffangkammer (9) und der Gasabscheideeinrichtung (10) zusammen größer als das hydraulische Volumen des oberhalb der Auffangkammer (9) und Gasabscheideeinrichtung (10) liegenden Abschnitts der Solaranlage ist.

14. Solaranlage nach einem der Ansprüche 1 bis 13, **dadurch gekennzeichnet, dass** die Umwälzpumpe (3) als Kreiselpumpe ausgebildet ist.

15. Solaranlage nach einem der Ansprüche 1 bis 14, **dadurch gekennzeichnet, dass** eine Befülleinrichtung vorhanden ist, welche ein in der Leitung (11) zwischen dem Sonnenkollektor und der Gasabscheideeinrichtung angeordnetes, unterhalb des untersten Leitungsabschnittes des Sonnenkollektors (1) liegendes Absperrventil (28), eine unterhalb des Absperrventils (28) von dieser Leitung (11) oder von einem oberen Bereich der Auffangkammer (9) ausgehende und zur zwischen der Umwälzpumpe (3) und dem Sonnenkollektor (1) verlaufenden Leitung (20) führende Bypassleitung (29), in der ein bei laufender Umwälzpumpe (3) sperrendes Rückschlagventil (33) angeordnet ist, ein in einer der Leitungen (15,19,20) zwischen der Gasabscheideeinrichtung (10) und der Einmündung der Bypassleitung (29) in die von der Umwälzpumpe zum Sonnenkollektor (1) verlaufende Leitung (20) angeordnetes Absperrventil (30) und beidseitig vom Absperrventil angeordnete absperrbare Anschlüsse (31, 32) aufweist.

16. Solaranlage nach einem der Ansprüche 1 bis 14, **dadurch gekennzeichnet, dass** eine Befülleinrichtung vorhanden ist, welche von einer Bypassleitung (29), die von der zwischen dem Sonnenkollektor (1) und der Gasabscheideeinrichtung (10) verlaufenden Leitung (11) im Bereich unterhalb des tiefstliegenden Leitungsabschnittes (34) des Sonnenkollektor (1) oder vom oberen Bereich der Auffangkammer (9) ausgeht und in die zwischen der Umwälzpumpe (3) und dem Sonnenkollektor (1) verlaufende Leitung (20) über ein Umschaltventil (35) mündet, einem einer der zwischen der Gasabscheideeinrichtung (10) und diesem Umschaltventil (35) verlaufenden Leitungen (15, 19, 20) angeordnetem Absperrventil (30) und beidseitig des Absperrventils (30) angeordneten absperrbaren Anschlüssen (31, 32) gebildet wird, wobei das Umschaltventil (35) zwischen einer ersten Stellung, in der die beidseitig des Umschaltventils liegenden Abschnitte der zwischen der Umwälzpumpe (3) und dem Sonnenkollektor (1) verlaufenden Leitung (20) miteinander verbunden sind, und einer zweiten Stellung, in der die Bypassleitung (29) mit dem zur Umwälzpumpe führenden Abschnitt der Leitung (20) verbunden ist, umschaltbar ist.

17. Solaranlage nach einem der Ansprüche 1 bis 14, **dadurch gekennzeichnet, dass** eine Befülleinrichtung vorhanden ist, die von einem unterhalb des Oberrandes der Auffangkammer (9) angeordneten Absperrventil (30) und einem auf der vom Sonnenkollektor (1) abgewandten Seite des Absperrventils (30) in den Förderkreislauf mündenden, öffen- und schließbaren Anschluss (32) sowie einem als Überlaufleitung dienenden Be- und Entlüftungsstutzen an der Oberseite der Auffangkammer (9) gebildet wird.

18. Solaranlage nach einem der Ansprüche 5 bis 17, **dadurch gekennzeichnet, dass** der Flüssigkeitsspiegel (17, 21) der Auffangkammer (9) sowohl im Ruhezustand als auch im stationären Betriebszustand bei eingeschalteter Umwälzpumpe (3) oberhalb der Einmündung der ersten Fluidverbindung in die Auf fangkammer (9) liegt.

19. Solaranlage nach einem der Ansprüche 1 bis 18, **dadurch gekennzeichnet, dass** der Flüssigkeitsspiegel (21) in der Auffangkammer (9) zumindest im stationären Betriebszustand bei eingeschalteter Umwälzpumpe (3) unterhalb der Einmündung der zweiten Fluidverbindung in die Auffangkammer (9) liegt.

## Claims

1. A solar installation having at least one solar collector (1), at least one heat exchanger (2) and at least one circulating pump (3) which are arranged in a conveying circuit for a heat transfer fluid able to be circulated by the at least one circulating pump (3), and having a collecting chamber (9) into which in the switched-off state of the at least one circulating pump (3) there flows heat transfer fluid accompanied by emptying of the solar collector (1), wherein the conveying circuit extends over a difference in height (h) between a lowest and a highest point (5, 6), wherein in the conveying circuit there is arranged a gas separating device (10) through which the heat transfer fluid flows when the solar installation is in the steady operational state with the circulating pump in operation, and wherein the gas separating device is formed by a chamber, **characterised in that** the lower edge (23) of the collecting chamber (9) lies less then 7 m, preferably less than 5 m, below the highest point (6) of the conveying circuit, wherein a value of less than 3 m is particularly preferred, and **in that** a gas separating material is introduced into the chamber of the gas separating device (10), and a line (11) leading the heat transfer fluid away from the solar collector (1) extends right into the lower region of the chamber of the gas separating device (10) and an opening (37) in this line (11), which opening is for the inflow of gas during the emptying procedure of the solar collector (1) when the circulating pump (3) is switched off, opens into the upper region of the chamber of the gas separating device (10).

2. A solar installation according to claim 1, **characterised in that** a line (11) leading the heat transfer fluid away from the solar collector (1) feeds the heat transfer fluid to the gas separating device (10) from above.

3. A solar installation according to claim 1 or claim 2, **characterised in that** the collecting chamber (9) is parallel connected to a portion of the conveying circuit, wherein in the steady operational state with switched-on circulating pump (3), the heat transfer fluid preferably flows through the conveying-circuit portion parallel to the collecting chamber (9), at least substantially without mixing with the heat transfer fluid located in the collecting chamber (9).

4. A solar installation according to claim 3, **characterised in that** at least part of the gas separating device (10) is arranged in the portion of the conveying circuit to which the collecting chamber (9) is parallel connected.

5. A solar installation according to any one of claims 1 to 4, **characterised in that** the collecting chamber (9) is connected to the conveying circuit via a first fluid connection (14, 27), opening into the lower region of the collecting chamber (9), for the feeding and leading away of heat transfer fluid and via a second fluid connection (13, 26), opening into the upper region of the collecting chamber (9), for the feeding and leading away of gas.

6. A solar installation according to claim 5, **characterised in that** the length of the fluid connections between the conveying circuit and the collecting chamber (9) is less than 2 m, preferably less than 1 m.

7. A solar installation according to claim 1 - 6, **characterised in that** the length of the line (11) between the solar collector (1) and the gas separating device (10) is less than 3 m, preferably less than 1 m.

8. A solar installation according to any one of claims 1 to 7, **characterised in that** the gas separating device (10) lies in the region of the height of the collecting chamber (9) or is arranged in a region between the connection of the collecting chamber (9) to the conveying circuit and the circulating pump (3), it preferably lying less than 2m below the collecting chamber (9).

9. A solar installation according to any one of claims 1 to 8, **characterised in that** the solar collector (1) is arranged in the region above the vertical centre (7) and the heat exchanger (2) in the region below the vertical centre (7) of the conveying circuit.

10. A solar installation according to claim 9, **characterised in that** the collecting chamber (9) and the gas separating device (10) are arranged above the vertical centre (7) of the conveying circuit.

11. A solar installation according to any one of claims 3 to 10, **characterised in that** the gas separating device (10) and the collecting chamber (9) have a common housing (8) and are separated from one another by an intermediate wall (12) arranged within the housing, wherein the first fluid connection is formed by an opening (14) in the intermediate wall (12) and/or the second fluid connection by an opening (13) in the intermediate wall (12).

12. A solar installation according to any one of claims 3 to 10, **characterised in that** the gas separating device (10) and the collecting chamber (9) have housings (24, 25) separated from one another and are connected to one another via an upper and a lower line (26, 27) forming the first and second fluid connection between the collecting chamber (9) and the conveying circuit.

13. A solar installation according to any one of claims 1 to 12, **characterised in that** the hydraulic volume of the collecting chamber (9) and the gas separation chamber (10) together is greater than the hydraulic volume of the solar-installation portion lying above the collecting chamber (9) and gas separating device (10).

14. A solar installation according to any one of claims 1 to 13, **characterised in that** the circulating pump (3) is in the form of a centrifugal pump.

15. A solar installation according to any one of claims 1 to 14, **characterised in that** a filling device is present and has a check valve (28) which is arranged in the line (11) between the solar collector and the gas separating device and lies below the lowermost line portion of the solar collector (1), a bypass line (29) which issues, below the check valve (28), from this line (11) or from an upper region of the collecting chamber (9), leads to the line (20) running between the circulating pump (3) and the solar collector (1) and in which there is arranged a non-return valve (33) effecting blocking when the circulating pump (3) is in operation, a check valve (30) which is arranged in one of the lines (15, 19, 20) between the gas separating device (10) and the junction of the bypass line (29) with the line (20) running from the circulating pump to the solar collector (1), and connections (31, 32) which can be closed off and which are arranged either side of the check valve.

16. A solar installation according to any one of claims 1 to 14, **characterised in that** a filling device is present which is formed by a bypass line (29) which issues from the line (11), running between the solar collector (1) and the gas separating device (10), in the region below the lowermost line portion (34) of the solar collector (1) or issues from the upper region of the collecting chamber (9) and opens, via a switch valve (35), into the line (20) running between the circulating pump (3) and the solar collector (1), by a check valve (30) arranged in one of the lines (15, 19, 20) running between the gas separating device (10) and this switch valve (35) and by connections (31, 32) which can be closed off and which are arranged on both sides of the check valve (30), wherein the switch valve (35) can be switched between a first position in which the portions, of the line (20) running between the circulating pump (3) and the solar collector (1), lying on both sides of the switch valve are connected to one another and a second position in which the bypass line (29) is connected to the portion of the line (20) leading to the circulating pump.

17. A solar installation according to any one of claims 1 to 14, **characterised in that** a filling device is present which is formed by a check valve (30) arranged below the upper edge of the collecting chamber (9) and by an openable and closable connection (32) opening into the conveying circuit at the side of the check valve (30) remote from the solar collector (1), as well as by an aeration and deaeration stub which serves as an overflow line and is at the upper side of the collecting chamber (9).

18. A solar installation according to any one of claims 5 to 17, **characterised in that** the fluid level (17, 21) of the collecting chamber (9) lies above the junction of the first fluid connection with the collecting chamber (9), both in the resting state and in the steady operational state with the circulating pump(3) switched on.

19. A solar installation according to any one of claims I to 18, **characterised in that** at least in the steady operational state with the circulating pump (3) switched on, the fluid level (21) in the collecting chamber (9) lies below the junction of the second fluid connection with the collecting chamber (9).

## Revendications

1. Installation solaire, comprenant au moins un capteur solaire (1), au moins un échangeur thermique (2) et au moins une pompe de recirculation (3) qui sont disposés dans un circuit de circulation pour un liquide caloporteur pouvant être recirculé par ladite au moins une pompe de recirculation (3), et avec une chambre collectrice (9), dans laquelle, à l'état désactivé de ladite au moins une pompe de recirculation (3), un liquide caloporteur entre en vidant le capteur solaire (1), dans laquelle le circuit de circulation s'étend sur une différence de hauteur (h) entre le point le plus bas et le point le plus haut (5, 6), et dans laquelle, dans le circuit de recirculation, un dispositif de séparation de gaz (10) est disposé, traversé par le liquide caloporteur à l'état de fonctionnement stationnaire de l'installation solaire lorsque la pompe de recirculation fonctionne, et dans laquelle le dispositif de séparation de gaz est formé par une chambre, **caractérisée en ce que** le bord inférieur (23) de la chambre collectrice (9) se trouve à moins de 7 m, de préférence à moins de 5 m au-dessous du point le plus haut (6) du circuit de circulation, dans laquelle une valeur de moins de 3 m est particulièrement préférée, et **en ce que** dans la chambre de dispositif de séparation de gaz (10) une matière de séparation de gaz est introduite et une conduite (11) évacuant le liquide caloporteur du capteur solaire (1) s'étend jusque dans la zone inférieure de la chambre du dispositif de séparation de gaz (10), et une ouverture (37) servant à l'entrée de gaz lors de l'opération de vidange du capteur solaire (1), lorsque la pompe de recirculation (3) est désactivée, dans cette conduite (11), débouche sur la zone supérieure de la chambre du dispositif de séparation de gaz (10).

2. Installation solaire selon la revendication 1, **caractérisée en ce qu'**une conduite (11) évacuant le liquide caloporteur du capteur solaire (1) amène le liquide caloporteur par le haut au dispositif de séparation de gaz (10).

3. Installation solaire selon la revendication 1 ou 2, **caractérisée en ce que** la chambre collectrice (9) est montée en parallèle à une section du circuit de circulation, dans laquelle de préférence le liquide caloporteur, à l'état de fonctionnement stationnaire lorsque la pompe de recirculation (3) est activée, s'écoule au moins substantiellement sans mélange avec le liquide caloporteur se trouvant dans la chambre collectrice (9) à travers la section du circuit de recirculation située en parallèle à la chambre collectrice (9).

4. Installation solaire selon la revendication 3, **caractérisée en ce que** dans la section du circuit de circulation qui est montée en parallèle à la chambre collectrice (9), au moins une partie du dispositif de séparation de gaz (10) est disposée.

5. Installation solaire selon l'une quelconque des revendications 1 à 4, **caractérisée en ce que** la chambre collectrice (9) est connectée au circuit de circulation par l'intermédiaire d'une première communication fluidique (14, 27) débouchant dans sa partie inférieure pour l'amenée et l'évacuation de liquide caloporteur et d'une deuxième communication fluidique (13, 26) débouchant dans sa partie supérieure pour l'amenée et l'évacuation de gaz.

6. Installation solaire selon la revendication 5, **caractérisée en ce que** la longueur des communications fluidiques entre le circuit de circulation et la chambre collectrice (9) mesure moins de 2 m, de préférence moins de 1 m.

7. Installation solaire selon la revendication 1 à 6, **caractérisée en ce que** la longueur de la ligne (11) entre le capteur solaire (1) et le dispositif de séparation de gaz (10) mesure moins de 3 m, de préférence moins de 1 m.

8. Installation solaire selon l'une quelconque des revendications précédentes 1 à 7, **caractérisée en ce que** le dispositif de séparation de gaz (10) se situe dans la zone de la hauteur de la chambre collectrice (9) ou dans une zone entre la connexion de la chambre collectrice (9) au circuit de circulation et la pompe de recirculation (3), dans laquelle il est situé de préférence à moins de 2 m au-dessous de la chambre collectrice (9).

9. Installation solaire selon l'une quelconque des revendications 1 à 8, **caractérisée en ce que** le capteur solaire (1) est disposé dans la zone au-dessus de la mi-hauteur (7) et l'échangeur thermique (2) est disposé dans la zone au-dessous de la mi-hauteur (7) du circuit de circulation.

10. Installation solaire selon la revendication 9, **caractérisée en ce que** la chambre collectrice (9) et le dispositif de séparation de gaz (10) sont disposés au-dessus de la mi-hauteur (7) du circuit de circulation.

11. Installation solaire selon l'une quelconque des revendications 3 à 10, **caractérisée en ce que** le dispositif de séparation de gaz (10) et la chambre collectrice (9) présentent un boîtier commun (8) et sont délimités l'un par rapport à l'autre par une paroi intermédiaire (12) disposée à l'intérieur du boîtier, dans laquelle la première communication fluidique est formée par une ouverture (14) dans la paroi intermédiaire (12) et/ou la deuxième communication fluidique est formée par une ouverture (13) dans la paroi intermédiaire (12).

12. Installation solaire selon l'une quelconque des revendications 3 à 10, **caractérisée en ce que** le dispositif de séparation de gaz (10) et la chambre collectrice (9) présentent des boîtiers (24, 25) séparés l'un de l'autre et sont reliés ensemble par l'intermédiaire d'une conduite supérieure et une conduite inférieure (26, 27) qui forment la première et la deuxième communication fluidique entre la chambre collectrice (9) et le circuit de circulation.

13. Installation solaire selon l'une quelconque des revendications 1 à 12, **caractérisée en ce que** le volume hydraulique de la chambre collectrice (9) et du dispositif de séparation de gaz (10) sont ensemble plus grands que le volume hydraulique de la section de l'installation solaire qui se trouve au-dessus de la chambre collectrice (9) et du dispositif de séparation de gaz (10).

14. Installation solaire selon l'une quelconque des revendications 1 à 13, **caractérisée en ce que** la pompe de recirculation (3) est réalisée comme une pompe centrifuge.

15. Installation solaire selon l'une quelconque des revendications 1 à 14, **caractérisée en ce qu'**il existe un dispositif de remplissage qui présente une vanne d'arrêt (28) disposée dans la conduite (11) entre le capteur solaire et le dispositif de séparation de gaz et située au-dessous de la section de conduite inférieure du capteur solaire (1), une conduite de dérivation (29) partant au-dessous de la vanne d'arrêt (28) de cette conduite (11) ou d'une zone supérieure de la chambre collectrice (9) et menant jusqu'à la conduite (20) s'étendant entre la pompe de recirculation (3) et le capteur solaire (1), conduite de dérivation dans laquelle est disposé un clapet de retenue (33) qui bloque quand la pompe de recirculation (3) fonctionne, une vanne d'arrêt (30) disposée dans l'une des conduites (15, 19, 20) entre le dispositif de séparation de gaz (10) et l'embouchure de la conduite de dérivation (29) dans la conduite (20) s'étendant de la pompe de recirculation au capteur solaire (1), et des connexions verrouillables (31, 32), disposées des deux côtés de la vanne d'arrêt.

16. Installation solaire selon l'une quelconque des revendications 1 à 14, **caractérisée en ce qu'**il existe un dispositif de remplissage, qui est formé par une conduite de dérivation (29) partant de la conduite (11) s'étendant entre le capteur solaire (1) et le dispositif de séparation de gaz (10) dans la zone au-dessous de la section de conduite inférieure (34) du capteur solaire (1) ou depuis la zone supérieure de la chambre collectrice (9) et débouchant par l'intermédiaire d'une vanne de commutation (35) dans la conduite (20) et s'étendant entre la pompe de recirculation (3) et le capteur solaire (1), par une vanne d'arrêt (30) disposée dans l'une des conduites (15, 19, 20) s'étendant entre le dispositif de séparation de gaz (10) et cette vanne de commutation (35), et par des connexions (31, 32) verrouillables et disposées des deux côtés de la vanne d'arrêt (30), dans laquelle la vanne de commutation (35) peut être commutée entre une première position, dans laquelle les sections situées des deux côtés de la vanne de commutation de la conduite (20) s'étendant entre la pompe de recirculation (3) et le capteur solaire (1) sont reliées entre elles, et une deuxième position, dans laquelle la conduite de dérivation (29) est reliée à la section de la conduite (20) menant à la pompe de recirculation.

17. Installation solaire selon l'une quelconque des revendications 1 à 14, **caractérisée en ce qu'**il existe un dispositif de remplissage qui est formé par une vanne d'arrêt (30) disposée au-dessous du bord supérieur de la chambre collectrice (9) et par une connexion (32) pouvant s'ouvrir et se fermer et débouchant dans le circuit de circulation sur le côté de la vanne d'arrêt (30) détourné du capteur solaire (1), ainsi que par un manchon d'aération et de désaération, servant de conduite de trop-plein, sur le côté supérieur de la chambre collectrice (9).

18. Installation solaire selon l'une quelconque des revendications 5 à 17, **caractérisée en ce que** le niveau de liquide (17, 21) de la chambre collectrice (9) se trouve au-dessus de l'embouchure de la première communication fluidique dans la chambre collectrice (9), aussi bien à l'état de repos qu'à l'état de fonctionnement stationnaire lorsque la pompe de recirculation (3) est activée.

19. Installation solaire selon l'une quelconque des revendications 1 à 18, **caractérisée en ce que** le niveau de liquide (21) dans la chambre collectrice (9) se situe au-dessous de l'embouchure de la deuxième communication fluidique dans la chambre collectrice (9), au moins à l'état de fonctionnement stationnaire lorsque la pompe de recirculation (3) est activée.
